# EUROPÄISCHE PATENTSCHRIFT

(11) **EP 3 872 382 B1**
(45) Veröffentlichungstag und Bekanntmachung des Hinweises auf die Patenterteilung: **13.11.2024**
(21) Anmeldenummer: 20159584.0
(22) Anmeldetag: 26.02.2020
(51) Int. Cl.: F16L 11/15, B29C 48/00, F16L 59/14, F16L 11/12

(54) **THERMISCH GEDÄMMTES LEITUNGSROHR**
THERMALLY INSULATED CONDUIT
CONDUITE THERMO-ISOLÉE

(43) Veröffentlichungstag der Anmeldung: 01.09.2021
(73) Patentinhaber: Brugg Rohr AG Holding, 5200 Brugg (CH)
(72) Erfinder: KRESS, Jürgen, 8966 Oberwil-Lieli (CH); DAMBOWY, Christian, 5412 Gebenstorf (CH)
(74) Vertreter: E. Blum & Co. AG

(56) Entgegenhaltungen:
- EP-A2- 2 209 721
- EP-B1- 2 209 721
- WO-A1-2018/138256
- CH-A5- 690 593
- DE-A1- 102012 112 280
- US-A1- 2011 220 386

## Beschreibung

### Gebiet der Erfindung

Die Erfindung betrifft ein thermisch gedämmtes Leitungsrohr mit einem beschrifteten, korrugierten Aussenmantel, eine Vorrichtung zur Herstellung des Aussenmantels und ein Verfahren zur Beschriftung des korrugierten Aussenmantels gemäss dem jeweiligen unabhängigen Anspruch.

### Hintergrund

Thermisch gedämmte Leitungsrohre sind bekannt und kommen in vielen Bereichen zur Anwendung, insbesondere zur Bereitstellung von Fernwärme, Nahwärme und Kühlung, sowohl in der Industrie als auch im Haushalt. Solche thermisch gedämmten Leitungsrohre umfassen wenigstens ein mediumführendes Innenrohr, eine sie umgebende thermische Dämmung und einen Aussenmantel. Geeignete Innenrohre bestehen aus Metall oder Kunststoff, die Dämmung aus einem oder mehreren Dämmstoffen, der Aussenmantel aus Kunststoff oder Metall.

Es gibt zahlreiche Herstellungsverfahren für solche gedämmten Leitungsrohre, beispielhaft erwähnt seien kontinuierlich arbeitende Verfahren gemäss EP0897788, WO2019/214954 und WO2008/142211. Diese Verfahren sind geeignet zur Herstellung von Leitungsrohren beliebiger Länge ("endlose Rohre"). Die so hergestellten thermisch gedämmten Leitungsrohre können unmittelbar nach der Produktion entweder auf einer Trommel aufgewickelt und anschliessend in Ringe der gewünschten Länge konfektioniert werden oder in Stangen der gewünschten Länge direkt abgelängt werden.

Bei den am Markt befindlichen Leitungsrohren dominieren solche mit Dämmstoffen auf der Basis von Polyurethan (PUR) oder Polyisocyanurat (PIR) oder auf der Basis von thermoplastischen Schäumen.

Die PUR- bzw. PIR-Schäume werden während des Produktionsverfahrens aus einem flüssigen Zweikomponentengemisch ("2K-Gemisch") gebildet, welches seinerseits aus Polyolen und Isocyanaten in einem festgelegten Mischungsverhältnis besteht. Dieses 2K-Gemisch vernetzt während des Herstellungsprozesses und deshalb resultiert eine gute Haftung zum Innenrohr (Kraftschluss) und - in Abhängigkeit vom gewählten Herstellungsverfahren - auch zu dem Aussenmantel. Solche Rohrsysteme sind sogenannte Verbundsysteme und unterliegen für Fern-und Nahwärmeanwendungen den Normen EN 15632-1:2009+A1:2014 (E) und EN 15632-2:2010+A1:2014.

Leitungsrohre mit Dämmstoffen auf der Basis von thermoplastischen Schäumen verwenden typischerweise vorgefertigte Matten aus dem entsprechenden Thermoplast, z. B. Polyethylen (PE). Die damit versehenen Innenrohre sind auf der Aussenseite mit einem Mantel aus PE umgeben, der entweder direkt durch Extrusion aufgebracht wird oder ebenfalls vorgefertigt ist. Es ist normalerweise kein kraftschlüssiger Verbund zu den Innenrohren und zu dem Aussenmantel gegeben. Solche Rohrsysteme sind sogenannte Nicht-Verbundsysteme und unterliegen für Fern-und Nahwärmeanwendungen den Normen EN 15632-1:2009+A1:2014 (E) und EN 15632-3:2010+A1:2014.

Schliesslich ist bekannt, dass Leitungsrohre mit einem sogenannten korrugierten Mantel leichter gebogen werden können, d. h. die Biegekräfte sind geringer. Dies erweist sich bei der Verlegung der Leitungsrohre als vorteilhaft. Die Herstellung solcher Leitungsrohre ist beispielsweise in CH714968 beschrieben.

Gemäss der Norm EN 15632-1:2009+A1:2014 müssen Leitungsrohre mit verschiedenen Informationen gekennzeichnet werden, die Aufschluss über bestimmte Eigenschaften und Parameter des Leitungsrohrs geben. Diese Informationen sind während der Montage oder im Schadensfall bei der Reparatur eines Leitungsrohrs wertvoll und notwendig. Die Informationen, die gemäss der obigen Norm mindestens alle drei Meter auf dem Leitungsrohr aufgebracht sein müssen, sind umfangreich. Rohrtyp, erfüllte Normen des vorliegenden Rohres, Aussendurchmesser, maximaler Betriebsdruck usw. müssen aufgeführt sein. Diese Angaben werden gemäss dem Stand der Technik längs zur Rohrachse aufgedruckt. In der Praxis sind viele Hersteller auch dazu übergegangen, zusätzliche Informationen aufzubringen, welche nicht explizit gefordert sind (z. B. die Metrierung) bzw. die Information sogar auf jedem Meter des Rohres anzugeben. Bei kontinuierlich hergestellten Leitungsrohren erfolgt dies während der Produktion mit der gleichen Geschwindigkeit wie die Leitungsrohre produziert werden.

Es hat sich in der Praxis gezeigt, dass bei den gedämmten Leitungsrohren mit einem korrugierten Aussenmantel die Lesbarkeit der Beschriftung unbefriedigend ist. Bei einem korrugierten Aussenmantel ergibt sich das Problem, dass ein Teil der Informationen unleserlich erscheint weil naturgemäss ein Teil der Tinte nicht auf den Stegen sondern in den Tälern zu liegen kommt.

Die Druckverfahren gemäss dem Stand der Technik haben ausserdem den Nachteil, dass sich die aufgebrachte Tinte (z. B. mittels Ink Jet) relativ leicht von der Manteloberfläche entfernen lässt. Eine Druckvorbehandlung z. B. durch Coronabehandlung oder Beflammung verbessert zwar die Haftung des Aufdrucks, dieser kann aber trotzdem mechanisch relativ leicht entfernt werden. Dies beispielsweise bei der Montage des Leitungsrohrs wenn dieses über das Erdreich gezogen wird. Auch nach dem Vergraben des Rohres kann das darüber liegende Erdreich dazu führen, dass die Beschriftung mehr oder weniger stark abgetragen wird. Bei einer späteren Revision ist dann nicht mehr eindeutig erkennbar um welchen Rohrtyp es sich handelt.

Ein weiterer problematischer Fall tritt auf, wenn Rohrenden miteinander verbunden werden müssen. Vor der Montage der Dichtringe, Fittings oder Muffen ist es üblich die Oberfläche der Leitungsrohre zu reinigen. Je nach Anwender können dazu auch Lösungsmittel wie Aceton oder Ethanol zum Einsatz kommen. Auch diese können die Bedruckung angreifen oder ablösen und somit unkenntlich machen.

Ein weiterer Nachteil ist, dass unter den Praxisbedingungen der Montage auf der Baustelle das Rohr in einem Graben liegt. Je nach Jahreszeit ist die Beleuchtung nicht optimal, so dass die Lesbarkeit des Aufdrucks potentiell erschwert wird. Auch Verschmutzungen und Feuchtigkeit auf der Rohroberfläche erschweren die praktische Arbeit.

Aus der deutschen Patentanmeldung DE 10 2012 112 280 A1 ist ein Verfahren zum Herstellen eines Isolierverbundrohrs 5 und ein solches Isolierverbundrohr bekannt. Das Isolierrohr umfasst ein Mediumrohr, ein Isolierrohr und ein Aussenrohr. Das Aussenrohr umfasst Stege und Täler die sich abwechseln und sich umfänglich erstrecken. Nach dem Zusammenführen der Rohre durchläuft das so gebildete Isolierverbundrohr eine Beschriftungsanlage in der das Rohr beschriftet wird.

Die europäische Anmeldung EP 2 209 721 A2 befasst sich mit einem durch Extrusion gewonnenes Objekt, dessen Aussenseite mit Tinte beschriftet wird.

Die US Anmeldung US 2011/0220386 A1 offenbart ein Leiterkabel mit einem Metallmantel das aussenseitig mit kodierten Informationen versehen ist und ein Verfahren zum Aufbringen der Beschriftung. Dabei wird die Beschriftung längs mittels Laser auf den Mantel aufgebracht. Der Fokuspunkt des Lasers wird in der Mitte zwischen den Tälern und den Stegen eingestellt, um die Lesbarkeit der Schrift zu erhöhen.

Das Schweizerische Patent CH 690 593 A5 offenbart ein ablängbares Rohr mit auf seiner Aussenseite angebrachten Längsmarkierungen in Form von Linien. In einer Ausführungsform ist das Rohr korrugiert und die Längsmarkierungen sind auf den Stegen angebracht.

### Darstellung der Erfindung

Aufgabe der Erfindung ist es daher, ein thermisch gedämmtes Rohr bereitzustellen, bei dem die Beschriftung auf seinem korrugierten Aussenmantel eine bessere Lesbarkeit ermöglicht und das Risiko verringert, dass die Lesbarkeit durch äussere mechanische oder chemische Einflüsse verschlechtert wird. Eine weitere Aufgabe der Erfindung ist die Vereinfachung der Ablängbarkeit des Leitungsrohrs ohne Informationsverlust.

Die Aufgabe wird in einem ersten Aspekt der Erfindung mit einem thermisch gedämmten Leitungsrohr gelöst, das mindestens ein Mediumrohr, mindestens eine um das Mediumrohr herum angeordnete Wärmedämmung und mindestens einen um die Wärmedämmung herum angeordneten Aussenmantel umfasst. Der Aussenmantel ist ein korrugierter Aussenmantel, der aussenseitig Stege und Täler aufweist, die sich quer zu einer Longitudinalachse des Aussenmantels über einen gesamten Mantelumfang erstrecken und sich in Richtung einer Longitudinalachse des Aussenmantels abwechseln. Der Aussenmantel ist durch einen Aussendurchmesser zwischen zwei gegenüberliegenden, höchsten Punkten eines Stegs charakterisiert. Auf einem Teil einer Oberseite mindestens eines Stegs weist er eine Beschriftung auf, welche sich quer zur Longitudinalachse und auf einer Länge eines Kreisbogens des Mantelumfangs erstreckt. Die Beschriftung auf diesem Steg enthält mindestens einen Teilblock von verschiedenen Informationen eines gesamten Informationsblocks oder einen gesamten Informationsblock. Die Beschriftung ist nur auf Stegen angebracht und wiederholt sich nach einer vorgegebenen Anzahl von Stegen, gegebenenfalls mit einer oder mehreren geänderten Informationen des Informationsblocks.

Dadurch, dass die Beschriftung auf einem Kreisbogen quer zur Longitudinalachse des Aussenmantels auf den Oberseiten von Stegen angebracht ist, können auf einem einzelnen Steg mehrere Informationen untergebracht werden, da mehr Platz als im Falle einer Beschriftung zur Verfügung steht, welche parallel zur Longitudinalachse verläuft. Eine solche parallele Beschriftung ist aufgrund der verhältnismässig geringen Breite der Stege sehr limitiert und muss auf einer viel grösseren Anzahl von Stegen verteilt werden. Folglich, wenn beispielsweise ein Aussenmantel abgeschnitten oder abgelängt wird, ist die Wahrscheinlichkeit von "abgeschnittenen" Informationen um einiges höher als bei der erfindungsgemässen Querbeschriftung.

Vorteilhaft ist es weiter in diesem Zusammenhang, dass die Informationen in bestimmten Abständen wiederholt werden, wobei manche Informationen bei der Wiederholung geändert werden können. Beispielsweise kann die Meterlänge bei der Beschriftung mit jedem neuen Informationsblock aktualisiert werden. Dadurch ist es zusätzlich zum genannten Vorteil möglich zu erkennen, an welcher Stelle man sich entlang des Aussenmantels befindet.

Ein zweiter Aspekt der Erfindung betrifft eine Vorrichtung zur Herstellung eines korrugierten Aussenmantels eines thermisch gedämmten Leitungsrohrs nach dem ersten Aspekt der Erfindung. Die Vorrichtung umfasst eine Station zur Bereitstellung eines rohen, glatten Aussenmantels, ein Transportband zum kontinuierlichen Transport des rohen Aussenmantels in Richtung seiner Longitudinalachse, ein der Station nachgeschaltetes Formwerkzeug zur Bildung der aussenseitigen Korrugation des Aussenmantels und eine dem Formwerkzeug nachgeschaltete Laservorrichtung zur Aufbringen der Beschriftung auf mindestens einem Steg des Aussenmantels.

Die Laservorrichtung ist in einem derartigen Abstand vom Aussenmantel angeordnet und diesem zugewandt, dass ein Aktionsbereich der Laservorrichtung den zur Beschriftung vorgesehenen Kreisbogen der Oberseite eines oder mehrerer Stege umfasst.

Ferner umfasst die Vorrichtung mindestens einen Sensor zur Detektion eines Eintritts eines ersten zu beschriftenden Stegs in den Aktionsbereich der Laservorrichtung und eine Steuerung zum Ansteuern der Laservorrichtung.

Die Steuerung ist mit Daten über eine Stegbreite und einen Abstand zwischen zwei benachbarten Stegen versorgbar und derart ausgestaltet, dass sie die Beschriftung eines oder mehrerer Stege mittels der Laservorrichtung triggert, sobald sie vom Sensor ein Triggersignal empfangen hat.

Die Station zur Bereitstellung des rohen Rohrs ist vorzugsweise ein Extruder oder ein Coextruder mit einem daran angeschlossenen entsprechenden Spritzkopf. Jedoch sind andere dem Fachmann bekannten Typen von Stationen, die zur Herstellung eines rohen Aussenmantels für ein thermisch gedämmtes Leitungsrohr geeignet sind, auch möglich.

Ein dritter Aspekt der Erfindung befasst sich mit einem Verfahren zur Beschriftung eines korrugierten Aussenmantels eines thermisch gedämmten Leitungsrohrs nach dem ersten Aspekt der Erfindung mittels der Vorrichtung nach dem zweiten Aspekt der Erfindung. Das Verfahren umfasst die Schritte:
a) Bereitstellen des korrugierten Aussenmantels mittels des Transportbands,
b) Detektieren des Eintritts mindestens eines ersten zur Beschriftung vorgesehenen Stegs in den Aktionsbereich der Laservorrichtung mittels des Sensors,
c) Triggern des Beschriftungsvorgangs für die Laservorrichtung mittels der Steuerung,
d) Wiederholen der Schritte b) und c) nach der Beschriftung des Stegs oder der Stege mit einem gesamten Informationsblock, gegebenenfalls wobei eine oder mehrere Informationen des Informationsblocks geändert werden.

Die erfindungsgemässe Vorrichtung und das erfindungsgemässe Verfahren haben den Vorteil, dass sie die Beschriftung des Aussenmantels während dem Herstellungsprozess ermöglichen, so dass diese Teilaufgabe keine zusätzliche Zeit in Anspruch nimmt. Dadurch, dass die Beschriftung laserbasiert ist, verleiht sie dem aufgebrachten Informationsblock eine viel höhere Beständigkeit, insbesondere im Hinblick auf die mechanische, chemische, oder witterungsbedingte Abtragung, da sie nicht mit einer Tinte gedruckt wird, sondern in den Kunststoff des Aussenmantels selbst "eingebrannt" wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Ansicht eines Teils eines erfindungsgemässen, thermisch gedämmten Leitungsrohrs,
Fig. 2a stark vereinfacht eine erfindungsgemässe Vorrichtung zur Beschriftung eines Aussenmantels des Leitungsrohrs aus Fig. 1,
Fig. 2b stark vereinfacht eine Vorrichtung zur Herstellung des Leitungsrohrs aus Fig. 1,
Fig. 3 die perspektivische Ansicht aus Fig. 1 mit einer Laservorrichtung zum Beschreiben der Stege des Aussenmantels,
Fig. 4 eine erste Ausführungsform des Leitungsrohrs aus Fig. 1 mit einem korrugierten Aussenmantel in Draufsicht,
Fig. 5 eine zweite Ausführungsform des Leitungsrohrs aus Fig. 1 mit einem korrugierten Aussenmantel in Schnittansicht,
Fig. 6 ein Beispiel einer Beschriftung quer zur Longitudinalachse des Leitungsrohrs aus Fig. 1, und
Fig. 7 ein Beispiel einer nicht erfindungsgemässen Beschriftung parallel zur Longitudinalachse des Leitungsrohrs aus Fig. 1.

### Weg(e) zur Ausführung der Erfindung

### Definitionen:

Der Begriff "vollumfänglich" bezieht sich auf den gesamten Umfang eines Stegs.

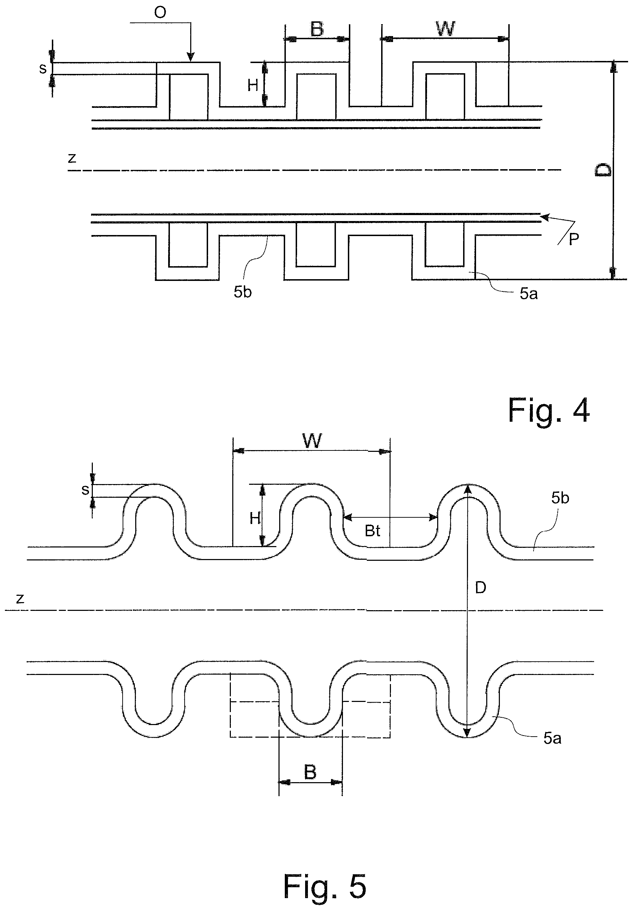

Der Aussendurchmesser D des Aussenmantels wird von einem höchsten Punkt der Oberseite des Stegs bis zum entsprechenden gegenüberliegenden Punkt auf demselben Steg gemessen. Der "höchste" Punkt des Stegs ist als der von der Longitudinalachse des Aussenmantels in radialer Richtung am weitesten angeordnete Punkt auf dem zugehörigen Steg. Mit anderen Worten ist der höchste Punkt durch die maximale Steghöhe H definiert, die in Fig. 4 und 5 gezeigt ist.

Im vorliegenden Zusammenhang bedeutet eine "komplette " Information, dass keine darin enthaltene Angabe von der restlichen Information örtlich getrennt ist. Mit anderen Worten wird eine komplette Information zusammenhängend beschriftet.

"Flexibel" bedeutet biegsam. In diesem Zusammenhang wird angemerkt, dass die Erfindung gleichermassen für nicht-biegsame Rohre anwendbar ist. Folglich spielt es für die Erfindung keine Rolle, ob der Aussenmantel aus Kunststoff oder aus Metall besteht.

Die "Oberseite" eines Stegs bezieht sich auf die zum Hauptkörper des Aussenmantels parallele Oberfläche des Stegs. Die Oberseite verläuft in einem konstanten Abstand um die Longitudinalachse des Aussenmantels.

Der aus Einfachheitsgründen "Kreisbogen" genannte Begriff ist im vorliegenden Zusammenhang als Streifen aufzufassen und bezieht sich auf die Fläche der Oberseite eines Stegs.

Ein "Informationsblock" stellt in diesem Zusammenhang einen Satz aller auf einen Aussenmantel in regelmässigen Abständen zu beschreibenden Informationen, was auf einem oder mehreren Stegen verteilt sein kann. Ein "Teilblock" stellt einen Teil des gesamten Informationsblock dar und bezieht sich auf die auf einem einzigen Steg aufzubringenden Informationen. Die Informationen eines Informationsblocks können nicht nur Buchstaben sondern auch jegliche andere Zeichen enthalten.

Ein "Aktionsbereich" der Laservorrichtung bezieht sich auf die Anzahl der Stege, die bei einem Schreibvorgang des Lasers erfasst und beschrieben werden können. Eine Erstreckung der Beschriftung auf einem einzelnen Steg ist zur Unterscheidung durch einen "Kreisbogen" des gesamten Umfangs eines Stegs charakterisiert. Damit ergibt sich ein Beschriftungsfeld der Grösse: Kreisbogen x Aktionsbereich.

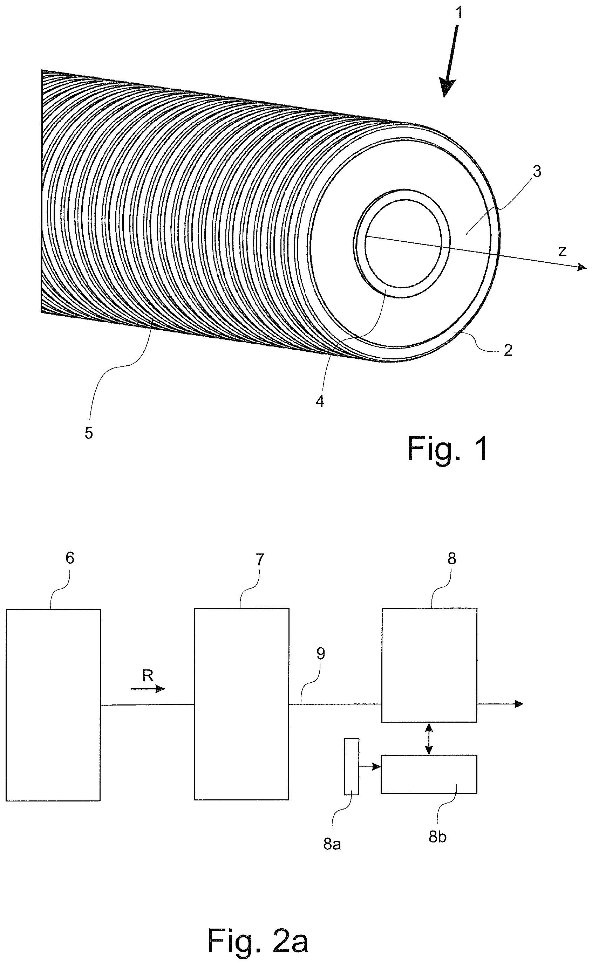

**Fig. 1** zeigt eine perspektivische Ansicht eines Teils eines erfindungsgemässen, thermisch gedämmten Leitungsrohrs 1. Das Leitungsrohr kann aus Kunststoff oder Metall sein. Es umfasst mindestens ein Mediumrohr 4, durch welches das zu transportierende Fluid fliesst, mindestens eine um das Mediumrohr herum angeordnete Wärmedämmung 3 und mindestens einen um die Wärmedämmung 3 herum angeordneten Aussenmantel 2. Der Aussenmantel 2 ist ein korrugierter Aussenmantel, wobei in der Figur die Korrugation mit dem Bezugszeichen 5 allgemein gekennzeichnet ist. Aussenseitig weist der Aussenmantel Stege und Täler auf, die die Korrugation 5 bilden und sich quer zu einer Longitudinalachse z des Aussenmantels 2 über einen gesamten Mantelumfang erstrecken. Die Stege und Täler wechseln sich in Richtung der Longitudinalachse z des Aussenmantels 2 ab.

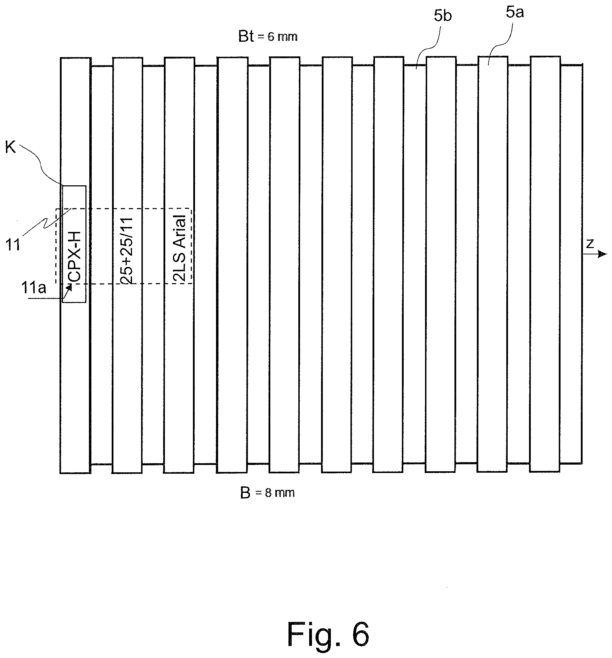

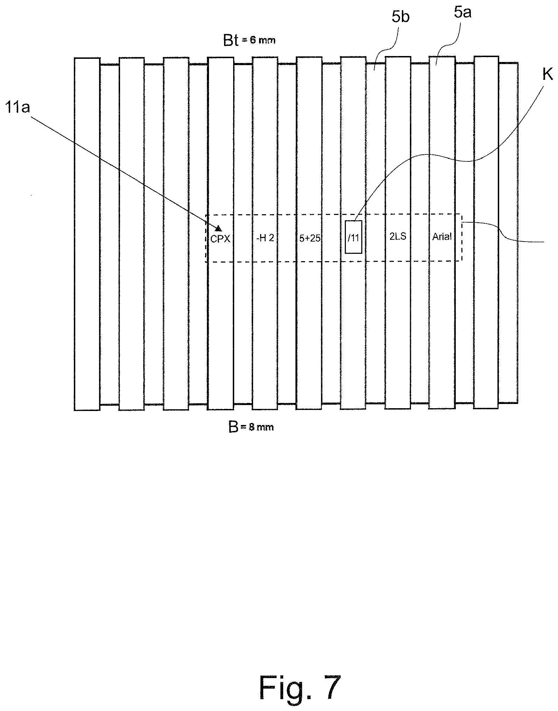

Der Aussenmantel 2 ist durch einen Aussendurchmesser D zwischen zwei gegenüberliegenden, höchsten Punkten eines Stegs charakterisiert, was in Fig. 4 und 5 ersichtlich ist, und beträgt vorzugsweise zwischen 40 und 250 mm. Der Aussenmantel weist auf einem Teil einer Oberseite O mindestens eines Stegs 5a eine Beschriftung auf, welche sich quer (Fig. 6) oder parallel (Fig. 7) zur Longitudinalachse z und auf einer Länge eines Kreisbogens K des Mantelumfangs erstreckt. Die Beschriftung auf diesem Steg 5a enthält mindestens einen Teilblock 11a (Fig. 6, 7) von verschiedenen Informationen eines gesamten Informationsblocks 11 (Fig. 6, 7) oder einen gesamten Informationsblock 11. Die Beschriftung wiederholt sich nach einer vorgegebenen Anzahl von Stegen, gegebenenfalls mit einer oder mehreren geänderten Informationen des Informationsblocks. Ein gesamter Informationsblock 11 ist im vorliegenden Kontext so zu verstehen, dass er alle Informationen enthält, mit denen der Aussenmantel beschriftet werden soll. Ein Teilblock bezieht sich auf eine oder mehrere Informationen des gesamten Informationsblocks, wobei ein Teilblock auch aus einer unvollständigen Information bestehen kann. Es ist aber bevorzugt, wenn ein Teilblock nur aus kompletten Informationen besteht. Mit anderen Worten ist die Information mit der ein Teilblock endet abgeschlossen. Der nächste Teilblock auf dem nächsten Steg beginnt folglich vorzugsweise mit einer neuen Information.

Wie oben erwähnt kann ein Informationsblock bzw. ein Teilblock nicht nur Text oder Symbole und Sonderzeichen enthalten, sondern auch Barcodes und QR Codes. Es hat sich überraschenderweise gezeigt, dass die Art von Codes auch lesbar auf den Stegen aufgebracht werden können und ihre Funktionsfähigkeit trotz der zum Teil sehr kleinen Stegbreite erhalten (möglich sind auch Micro_QR-Code, Secure-QR-Code, iQR-Code, Frame-QR-Code). Dadurch, dass diese QR Codes sehr klein sind, ist es möglich diese auch bei den angegebenen Bandgeschwindigkeiten in hoher Qualität mehrmals pro Meter Rohr aufzubringen.

Der Aussenmantel ist in der Ausbildung aus Kunststoff vorzugsweise flexibel. Nachfolgend wird die Erfindung anhand eines solchen Aussenmantels beschrieben. In der Ausbildung aus Metall gelten die nachfolgenden Ausführungen mutatis mutandis, wobei selbstverständlich Additive, die im Zusammenhang mit der Ausbildung aus Kunststoff beschrieben sind, in diesem Fall keine Anwendung finden.

Bei der Ausbildung aus Kunststoff ist eine breite Auswahl an Materialien geeignet für den korrugierten Aussenmantel. Solche Mantelmaterialien sind an sich bekannt und sind kommerziell erhältlich oder nach bekannten Verfahren hergestellt. Besonders geeignet sind thermoplastische Polymere. Bevorzugt sind Polyolefine, wie Polyethylene (PE) und Polypropylene (PP) . Geeignet sind PE hoher Dichte (HDPE), PE niedriger Dichte (LDPE), lineares PE niedriger Dichte (LLDPE).

In einer Ausgestaltung der Erfindung weisen die thermoplastischen Polymere einen Schmelzindex (Melt Flow Rate, MFR) von 0.1 - 25 g/10 min, bevorzugt 0.2 - 20 g/10 min, meist bevorzugt 0.3 - 15 g/10 min auf, gemessen bei einer Last von 2.16 kg und einer Temperatur von 190 °C gemäss der DIN EN ISO 1133/2012.

In einer Ausgestaltung der Erfindung weisen die thermoplastischen Polymere ein Modul von 300 - 100 MPa, bevorzugt 350 - 1400 MPa, meist bevorzugt 400 - 1300 MPa, bestimmt gemäss der Norm SN EN ISO 527-2/2012-06 auf.

In einer Ausgestaltung der Erfindung weisen die thermoplastischen Polymere eine Dichte von 870 - 970 kg/m³ auf bestimmt gemäss der ISO 1183-1/2019-03.

In einer Ausgestaltung der Erfindung beinhalten die thermoplastischen Polymere Additive, welche in der Lage sind, den Kontrast bei der Beschriftung mit einem Laser zu erhöhen. Dabei kann es sich um Schichtsilikate aus der Familie der Glimmer handeln. Beispielhaft erwähnt seien Additive, welche als Iriotec ^{™} der Fa Merck KgaA kommerziell erhältlich sind.

In einer Ausgestaltung der Erfindung weist das Leitungsrohr bei der Ringsteifigkeit gemäss SN EN ISO 9969/ 2016-05, Werte von mindestens 4 kN/m² auf, bevorzugt mindestens 10 kN/m², meist bevorzugt mindestens 15 kN/m² auf. Dieser Parameter ist geeignet zur Charakterisierung der Leitungsrohr - Stabilität. Für viele Anwendungen der hier beschriebenen thermisch gedämmten Leitungsrohre spielt die Ringsteifigkeit eine wichtige Rolle. Dabei werden hohe Werte als vorteilhaft angesehen. Wäre die Ringsteifigkeit zu niedrig, würde das Leitungsrohr bspw. unter der Last des Erdreichs kollabieren.

Der Gehalt dieser Additive im Mantelmaterial liegt bei unter 3 Gewichtsprozent, bevorzugt unter 2.5 Gewichtsprozent, am meisten bevorzugt bei unter 2.0 Gewichtsprozent.

Die Norm EN 15632-1:2009+A1:2014 fordert für Fernwärmerohre einen Russgehalt von mindestens 2.0 Gewichtsprozent im Aussenmantel. Überraschenderweise zeigt sich, dass die Laserbeschriftung auf Polyethylen nur ab einem geringeren Russgehalt befriedigende Ergebnisse liefert, d. h. dass der Kontrast ausreichend ist. Der Russgehalt ist daher im vorliegenden Fall unter 3 Gewichtsprozent, bevorzugt unter 2.5 Gewichtsprozent, meist bevorzugt unter 2.0 Gewichtsprozent. In einer Ausgestaltung der Erfindung ist der Russgehalt unter 1.0 Gewichtprozent.

Bei thermisch gedämmten Rohren hat sich schwarz als Aussenmantelfarbe weitgehend durchgesetzt. Die Erfindung ist aber auch auf andere Aussenmantelfarben anwendbar. Auch in diesen Fällen gelten die angegebenen Bereiche.

Das Mediumrohr oder Innenrohr sowie die Dämmung, die meist als Schaum zwischen Aussenmantel und Innenrohr eingebracht wird, ist für die Erfindung nicht relevant und wird daher nicht näher beschrieben. Es gelten die aus dem Stand der Technik dafür bekannten Ausführungsformen.

In einer Ausführungsform ist dem Kunststoff mindestens ein zweites Additiv als Lichtschutzmittel beigemischt. Dabei handelt es sich z.B. um Schutz gegen UV-Einwirkung.

Gegebenenfalls enthält das Mantelmaterial auch noch andere Additive um beispielsweise die Oxidationsbeständigkeit zu erhöhen. Die Oxidation Induction Time (OIT) ist bevorzugt grösser 20 min, gemessen gemäss der DIN EN 728: 1997-3.

**Fig. 2a** zeigt stark vereinfacht eine erfindungsgemässe Vorrichtung zur Beschriftung des Aussenmantels aus Fig. 1. Die Vorrichtung ist zur kontinuierlichen Herstellung eines korrugierten Aussenmantels 2 eines thermisch gedämmten Leitungsrohrs 1 geeignet. Jedoch kann sie auch für eine diskontinuierliche Herstellung verwendet werden, was die Beschriftung vereinfacht. Dies ist weiter unten beschrieben.

Die Vorrichtung umfasst eine Station 6, insbesondere einen Extruder oder Coextruder, zur Bereitstellung des rohen, glatten Aussenmantels. In einem bekannten Verfahren wird der Aussenmantel extrudiert oder unter Einbeziehung einer weiteren Polymerschicht coextrudiert. Am Ausgang des Extruders oder Coextruders wird der Aussenmantel auf einem Metallrohr aufgebracht. Zu diesem Zeitpunkt ist er noch glatt und das Material ist noch weich.

Weiter umfasst sie ein Transportband 9 zum kontinuierlichen Transport des Aussenmantels in Herstellungsrichtung R parallel zu seiner Longitudinalachse z. Das Transportband wird zur Vereinfachung für die gesamte Herstellungsanlage als das Transportmittel für den Aussenmantel in allen Zuständen angenommen.

Weiter umfasst die Vorrichtung ein der Station nachgeschaltetes Formwerkzeug 7 zur Bildung der aussenseitigen Korrugation des Aussenmantels. Beispielsweise kann als Formwerkzeug ein Korrugator des Typs HD 250-38 der Fa Drossbach, Rain am Lech, Deutschland, verwendet werden. Damit können korrugierte Rohre aus Polyethylen (PE) hergestellt werden. Diese korrugierten Rohre können als Aussenmäntel für die herzustellenden thermisch gedämmten Rohre dienen. Als Material für den Aussenmantel kann z.B. lineares Polyethylen niedriger Dichte (LLDPE) zum Einsatz kommen. Das LLDPE kann eine Dichte von 920 kg/m³ gemäss der Norm ASTM D792:2013 und einen Schmelzindex von 0.90 g/10 min, gemessen bei einer Temperatur von 190°C, und einer Last von 2.16 kg gemäss der Norm ASTM D1238:2013 haben. In diesem Beispiel wurde der Elastizitätsmodul experimentell zu 491 MPa bestimmt, gemäss der Norm SN EN ISO 527-2/2012-06. In einem Beispiel beträgt der Gehalt an Russ in dem PE drei Gewichtsprozent und in einem anderen Fall jedoch nur 0.2 Gewichtsprozent. Im Formwerkzeug wird Wandmaterial des rohen, glatten Aussenmantels, der wie erwähnt noch weich ist, mittels Vakuum in die für die Bildung von Stegen im Aussenmantel entsprechend geformten Backen eingesogen.

Dem Formwerkzeug nachgeschaltet ist eine Laservorrichtung 8 zum Aufbringen der Beschriftung auf mindestens einem Steg des Aussenmantels.

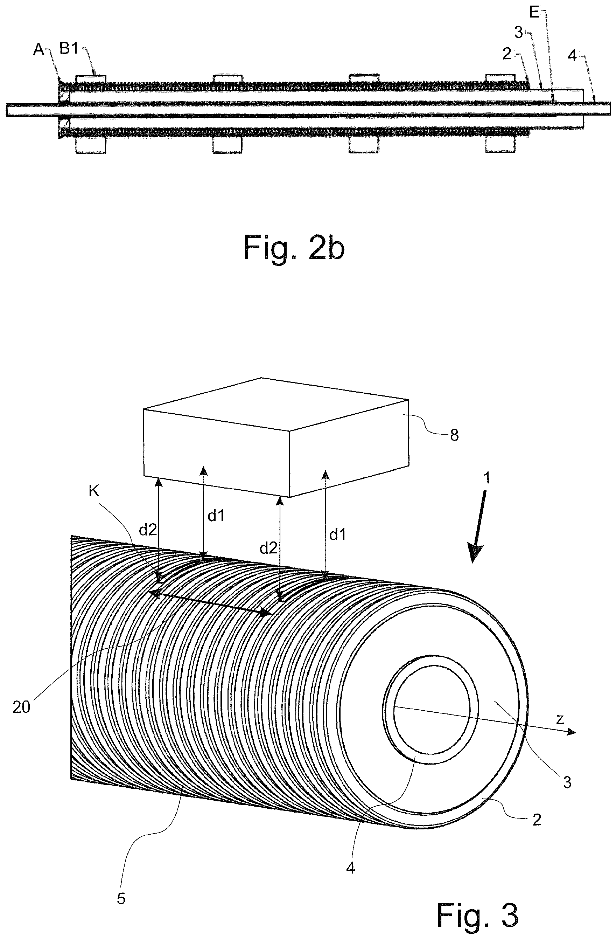

Mindestens ein Sensor 8a ist zur Detektion eines Eintritts eines ersten zu beschriftenden Stegs in einen Aktionsbereich 20 (Fig. 3) der Laservorrichtung vorgesehen.

Weiter umfasst die Vorrichtung eine Steuerung 8b zum Ansteuern der Laservorrichtung, wobei die Steuerung mit Daten über eine Stegbreite und einen Abstand zwischen zwei benachbarten Stegen versorgbar ist. Die Steuerung ist derart ausgestaltet, dass sie die Beschriftung eines oder mehrerer Stege mittels der Laservorrichtung triggert, sobald sie vom Sensor ein Triggersignal empfangen hat. Die Steuerung ist mit einem Benutzer-Terminal gekoppelt und kann den zu beschriftenden Informationsblock an die Laservorrichtung übermitteln. Alternativ kann die Laservorrichtung selbst über ein solches Terminal verfügen.

Nachfolgend wird anhand von **Fig. 2b** die Herstellung eines gedämmten Leitungsrohrs 1 beschrieben. Der wie oben beschrieben hergestellte Aussenmantel 2 wird zur Herstellung des gedämmten Leitungsrohrs 1 weiterverarbeitet. Dazu wird ein Innenrohr oder Mediumrohr E aus vernetztem Polyethylen (Pex) mit dem Aussendurchmesser von 50 mm und einer Wanddicke von 4.6 mm mit einem Folienschlauch umgeben (nicht gezeigt). Dieser Folienschlauch besteht im vorliegenden Beispiel aus einer Folie mit einer Dicke von 0.08 mm aus Polyethylenterephthalat (PET) und hat einen Umfang von 335 mm. Zur Begradigung des Pex-Rohrs wird als Hilfsmittel ein Stahlrohr (4) mit dem Aussendurchmesser von 38 mm durch diesen hindurchgeschoben. Die Länge des Pex-Rohres beträgt beispielsweise 2040 mm, die Länge des Stahlrohrs 2200 mm und die Länge des Aussenmantels 1970 - 2000 mm. Das Pex-Rohr mit dem Folienschlauch und dem innenliegenden Stahlrohr wird in den korrugierten Aussenmantel 2 geschoben und am Ende mit einem Flansch A verschlossen. Der gesamte Aufbau wird auf einem Tisch um einen Winkel um 5 ° geneigt. Der Aussenmantel wird mit entsprechenden Formbacken B1 fixiert, um eine Verbiegung oder Verformung des Leitungsrohrs während des Ausschäumens mit dem Dämmmaterial 3 zu verhindern.

Als Dämmung bzw. Dämmmaterial wird typischerweise ein Zweikomponentengemisch aus Polyol und Isocyanat verwendet, das in den Spalt zwischen der Schlauchfolie und dem PE-Rohr am leicht erhöhten Ende des Aussenmantels mit Hilfe einer Lanze eingeschossen. Experimentell wurden an einem gemäss dieses Beispiels hergestellt ein Leitungsrohr beim ausgehärteten Schaum folgende Eigenschaften bestimmt: Druckfestigkeit bei 10 % Stauchung zu 0.14 MPa, gemessen gemäss der Norm ISO 844:2014. Der Elastizitätsmodul wurde zu 14.3 MPa gemäss der Norm DIN EN ISO 527-4:1997-07 bestimmt. Diese Werte wurden an Probenkörpern erhalten mit einer Dichte von 65.2 kg/m³, bestimmt gemäss der Norm ISO 845:2006.

Wie bereits erwähnt können die beschriebenen thermisch gedämmten Rohre mit einem korrugierten Aussenmantel kontinuierlich oder diskontinuierlich hergestellt werden.

Das Verfahren zur Beschriftung des korrugierten Aussenmantels des thermisch gedämmten Leitungsrohrs mittels der beschriebenen Vorrichtung umfassend die nachfolgend erläuterten Schritte.

In einem ersten Schritt a) wird der korrugierte Aussenmantel mittels des Transportbands bereitgestellt. Der korrugierte Aussenmantel wurde wie zuvor beschrieben mittels des Extruders oder Coextruders und dem Formwerkzeug gebildet.

In einem zweiten Schritt b) wird der Eintritt mindestens eines ersten zur Beschriftung vorgesehenen Stegs in den Aktionsbereich 20 der Laservorrichtung mittels des Sensors detektiert. Dabei ist es bevorzugt wenn der Sensor alle Stege detektiert und beginnend mit dem ersten Steg aufzählt, so dass eine Beschriftung auf einem beliebigen Steg begonnen werden kann. Dazu kann z.B. die Stegnummer angegeben werden. Dies ist insbesondere vorteilhaft wenn der Informationsblock in bestimmten Abständen wiederholt werden soll.

In einem dritten Schritt c) wird der Beschriftungsvorgang für die Laservorrichtung mittels der Steuerung getriggert. Dies geschieht sobald der entsprechende zu beschriftende Steg vom Sensor detektiert worden ist.

In einem vierten Schritt d) werden die Schritte b) und c) nach der Beschriftung des Stegs oder der Stege mit einem gesamten Informationsblock, gegebenenfalls wobei eine oder mehrere Informationen des Informationsblocks geändert werden, wiederholt. Beispielsweise kann auf jedem Meter Aussenmantel der Informationsblock unter Nummerierung der laufenden Meter aufgebracht werden. Dabei stellt die Metrierung ein Beispiel für Informationen des Informationsblocks dar, die bei jeder neuen Beschriftung mir einem Informationsblock geändert wird.

Die Beschriftung kann sowohl beim hohlen Aussenmantel als auch beim Aussenmantel des fertigen Leitungsrohrs durchgeführt werden.

**Fig. 3** zeigt die perspektivische Ansicht aus Fig. 1 mit einer Laservorrichtung 8 aus Fig. 2 zum Beschreiben der Stege des Aussenmantels 2. Die Laservorrichtung ist in einem derartigen Abstand d1 vom Aussenmantel angeordnet und diesem zugewandt, dass der Aktionsbereich 20 der Laservorrichtung den zur Beschriftung vorgesehenen Kreisbogen K der Oberseite eines oder mehrerer Stege umfasst. Der Abstand d1 der Laservorrichtung 8 vom Aussenmantel wird für die vorliegenden Erläuterungen als der kürzeste Abstand d1 angenommen. Selbstverständlich variiert ein ortsbezogener Abstand d2 über den gesamten Kreisbogen. Bevorzugt beträgt ein maximaler Mittelpunktswinkel des Kreisbogens des Rohrumfangs 180°, bevorzugt 140°, meist bevorzugt 100°. Ein minimaler Mittelpunktswinkel ist derart gewählt, dass ein komplettes Schriftzeichen einer der Informationen auf der Oberseite des Stegs lesbar ist. Der Abstand der Laservorrichtung vom Aussenmantel ist als der minimale Abstand zum Kreisbogen K definiert. In Fig. 3 ist ein weiterer Abstand d2 eingezeichnet, der den maximalen Abstand der Laservorrichtung zum Kreisbogen K definiert. Der beschreibbare Kreisbogen K ist durch die Fokustiefe des Lasers der Laservorrichtung bestimmt. Die Fokustiefe ergibt sich aus dem Abstandsunterschied F=d2-d1. Dies ist bei der Ausgestaltung der Laservorrichtung als stationäre Vorrichtung relevant.

Die Laservorrichtung 9 umfasst mindestens einen Laserkopf (z. B. zwei Laserköpfe) und eine Ablenkvorrichtung mit einer Ablenkungsoptik (nicht gezeigt) für einen Laserstrahl des Laserkopfes. Weiter umfasst die Ablenkvorrichtung eine Antriebsvorrichtung, z.B. einen galvanischen Antrieb, zum Verstellen der Ablenkungsoptik, welche Antriebsvorrichtung die Ablenkungsoptik derart mit einer Geschwindigkeit des Transportbands synchronisiert, dass ein Beschriftungsvorgang der Laservorrichtung bei laufendem Transportband durchführbar ist. Für die oben erwähnte diskontinuierliche Herstellung des Leitungsrohrs kann die Antriebsvorrichtung entfallen da in diesem Fall der Aussenmantel 2 beim Beschriftungsvorgang nicht bewegt werden muss. Eine damit verbundene Synchronisation ist entsprechend nicht nötig.

Die Ablenkungsoptik, die z.B. galvanische Spiegel zur Ablenkung des Laserstrahls umfasst, kompensiert bei der kontinuierlichen Herstellung des Leitungsrohrs dessen Bewegung in Herstellungsrichtung, so dass die Laservorrichtung stationär sein kann, was die Anlage vereinfacht. Dabei ist die Ablenkvorrichtung mit der oben erwähnten Steuerung gekoppelt, die dynamisch Aktoren der Antriebsvorrichtung steuern kann, so dass die Spiegel verschiebbar und/oder drehbar und/oder schwenkbar sind. Dabei ist die Steuerung insbesondere in der Lage, Informationen über die aktuelle Herstellungsgeschwindigkeit des Leitungsrohrs zu sammeln und die Aktoren entsprechend zu steuern. Die dynamische Steuerung der Aktoren ist insbesondere auch vorteilhaft, da erfahrungsgemäss die Herstellungsgeschwindigkeit während einer Produktionskampagne bis ca. +/-5% variieren kann. Da die Stege vergleichsweise schmal sind, ist eine relative hohe Präzision des Laserstrahls erforderlich, damit dieser immer im vorgesehenen Kreisbogen auf dem Steg schreibt und nicht in ein Tal gerät. Beispielsweise kann dazu der Laser F220i der Fa. Domino Deutschland GmbH, Wiesbaden, Deutschland verwendet werden.

Weiter sind in einer Ausführungsform die Laservorrichtung und die Ablenkvorrichtung derart ausgestaltet, dass sie eine gleichzeitige Beschriftung mehrerer Stege ermöglicht, indem die Ablenkvorrichtung über eine Anzahl entsprechender optischer Elemente, z.B. durch die Verwendung mehrerer Laserköpfe und entsprechend zugeordnete Spiegel, verfügt erreicht werden.

In einer anderen Ausführungsform kann die Laservorrichtung zum Aussenmantel hin oder vom Aussenmantel weg verschoben werden, d.h. in Richtung und Gegenrichtung des Pfeils d1. Damit kann ein grösserer Kreisbogen K beschriftet werden, da der Fokusbereich in diesem Fall dynamisch angepasst wird. Mit anderen Worten kann beispielsweise am Punkt des Pfeils d2 mit einer Querbeschriftung angefangen werden, wobei der Laser näher am Aussenmantel angeordnet ist, und je weiter die Beschriftung in Richtung des Pfeils d1 fortschreitet kann die Laservorrichtung kontinuierlich oder schrittweise angehoben werden, so dass der gerade zu beschreibende Stegbereich immer im Laserfokus liegt.

Die Variation des Abstands der Laservorrichtung vom Aussenmantel ist unabhängig vom geschilderten Verwendungsfall auch vorteilhaft, wenn verschiedene Aussenmäntel mit unterschiedlichen Aussendurchmesser mittels derselben Laservorrichtung beschriftet werden sollen. Als Ausgangslage wurde beispielsweise ein Aussenmantel mit einem grossen Aussendurchmesser beschriftet, wobei der Kreisbogen eine bestimmte Erstreckung hatte. Soll nun z.B. ein Aussenmantel mit kleinerem Aussendurchmesser und damit grösserer Krümmung des Kreisbogens beschriftet werden, so ist der Wert F=d1-d2 grösser als bei dem grösseren Aussenmantel. Das kann als Folge haben, dass die Randbereiche des Kreisbogens aus dem Fokus liegen. Die Änderung des Abstands der Laservorrichtung kann hier Abhilfe schaffen.

In einer weiteren Ausführungsform der Laservorrichtung ist eine Halte- und Antriebsvorrichtung vorgesehen, die die Laservorrichtung auf einem Kreisbogen um mindestens einen Teil des Aussenmantels hin und her bewegen kann. Damit kann ein grösserer Kreisbogen als bei stationärer Laservorrichtung auf der Oberseite eines Stegs beschriftet werden.

Die verschiedenen Möglichkeiten der Verstellung der Lage der Laservorrichtung können in Betracht gezogen werden, da das herzustellende Leitungsrohr während der Produktion nicht gedreht werden kann, was die Berücksichtigung des beschriebenen Fokusbereichs notwendig macht. Wird das fertige Leitungsrohr diskontinuierlich, d.h. nach der Herstellung, in stationärem Zustand beschriftet, so ist keine verstellbare Ablenkoptik zwingend notwendig, da in diesem Fall das Leitungsrohr selbst mit fortschreitender Beschriftung bei Anwendung des Lasers an einem konstanten Ort und unter Berücksichtigung der Schreibgeschwindigkeit des Lasers gedreht werden kann.

Bei den verwendeten Lasern handelt es sich vorzugsweise um Faserlaser (Kohlendioxidlaser) mit einer Wellenlänge von 1064 nm. Je nach Laser können z.B. Leistungen von 20 W oder 30 W können vorgesehen sein.

Die in Zusammenhang mit Fig. 2a bzw. 2b testweise hergestellten Leitungsrohre wurden jeweils auf einem Steg mit einem Laser mit dem Schriftzug «CPX-H 25+25/11 2LS Arial» beschriftet. Dabei wurden folgende Einstellungen verwendet:
Faserlaser mit der Wellenlänge 1064 nm
Laserleistung 20 W
Abstand zwischen Laser und Manteloberfläche 250 mm
Markierungszeit 5382 ms

Das Leitungsrohr mit dem hohen Gehalt an Russ im Mantel (3 Gewichtsprozent) zeigte fast keinen sichtbaren Kontrast, wohingegen das Leitungsrohr mit dem niedrigen Gehalt an Rus im Mantel (0.2 Gewichtsprozent) einen sehr klar sichtbaren, hell leuchtenden Kontrast aufwies, wobei die Beschriftung in einer Entfernung von 2 m noch deutlich zu lesen war.

**Fig. 4** und **Fig. 5** zeigen eine erste bzw. eine zweite Ausführungsform des Leitungsrohrs aus Fig. 1 mit einem korrugierten Aussenmantel in Draufsicht bzw. in Schnittansicht.

Die beiden Ausführungsformen unterscheiden sich voneinander dadurch, dass in der ersten Ausführungsform die Oberseite O der Stege eine gerade Fläche bildet und mit den Seitenflächen der Stege einen im Wesentlichen rechten Winkel bildet, während in der zweiten Ausführungsform die Oberseite eine gekrümmte Fläche darstellt, wobei die Krümmung in die Seitenflächen übergeht. Es kann aber auch vorgesehen sein, dass die Oberseite gekrümmt ist, sie aber trotzdem mit den Seitenflächen Ecken bildet. Es ist jedoch zu beachten, dass idealisierte Ecken in der Praxis nicht verwirklicht werden können.

In diesem Zusammenhang wird nochmals angemerkt, dass der Aussendurchmesser D des Aussenmantels vom höchsten Punkt der Oberseite eines Stegs zum gegenüberliegenden höchsten Punkt desselben Stegs angenommen wird. In der ersten Ausführungsform befinden sich alle Punkte der Oberseite in gleichem Abstand von der Longitudinalachse, während in der zweiten Ausführungsform dieser Punkt derjenige Punkt ist, der am weitesten von der Longitudinalachse entfernt ist.

In einer Ausführungsform der Erfindung umfasst der Aussenmantel eine Polymerschicht P, derart dass die Stege nicht von der Polymerschicht bedeckt sind (gemäss Fig. 4). Diese Polymerschicht wird bei der Herstellung des rohen Aussenmantels, der meist durch Extrusion gewonnen wird, coextrudiert. In diesem Fall wird anstatt eines Extruders, der bei der Ausbildung des Aussenmantels ohne Polymerschicht eingesetzt wird, ein Coextruder verwendet, mittels welchem gleichzeitig mit der Formung des Aussenmantels die zusätzliche Polymerschicht einbindet. Normalerweise ist diese Polymerschicht im Inneren der Wand des Aussenmantels oder auf dessen Innenseite eingebracht. Daher sind die Stege und Täler normalerweise nicht mit der Polymerschicht beschichtet.

Die Korrugation ist durch mehrere Parameter gekennzeichnet; eine Wellenlänge W der Korrugation beschreibt den Abstand zwischen der Mitte eines Wellentals und der Mitte des nächsten Wellentals, wobei sich dazwischen genau ein Steg befindet, wonach sich diese Anordnung wiederholt. Das ist in Fig. 4 und 5 mit den entsprechenden Distanzpfeilen gekennzeichnet. Es ist bevorzugt wenn die Wellenlänge im Wesentlichen konstant ist. Es ist anzumerken, dass eine Breite B eines Stegs nicht notwendigerweise der Breite eines Tals entspricht. Verschiedene Verhältnisse zwischen den Breiten können innerhalb der Wellenlänge vorkommen. Beispielsweise kann ein Steg breiter als ein Tal sein. Die Höhe eines Stegs vom Tal aus gesehen ist mit H gekennzeichnet und spielt für die Erfindung keine Rolle. Es wird angemerkt dass die Täler den zylindrischen Hauptkörper des Aussenmantels bilden. Eine Wand des Aussenmantels hat eine Dicke s. Dabei kann die Korrugation so beschaffen sein, dass die gesamte Wand korrugiert wird, was in Fig. 5 zu sehen ist. Dabei entstehen "Taschen" welche vom hohlen Innenraum der Stege gebildet sind.

Für die mittels der Erfindung hergestellten Leitungsrohre bzw. Aussenmäntel sind bevorzugt aber nicht abschliessend folgende Parameter erfüllt:
- D=40-70mm, W=4-40% von D, B=5-50% von D, H=3-25% von D; oder
- D=71-100mm, W=4-40% von D, B=4-50% von D, H=2-25% von D; oder
- D=101-130mm, W=3-40% von D, B=3-50% von D, H=1-25% von D; oder
- D=131-160mm, W=3-40% von D, B=2-50% von D, H=1-25% von D; oder
- D=161-250mm, W=2-40% von D, B=1-50% von D, H=1-25% von D.

Ferner hängt auch eine Wanddicke s des Aussenmantels vom Aussendurchmesser D ab, wobei folgende Parameter erfüllt sind:
- D=40-100mm, s=0.5-4.5mm; oder
- D=101-130mm, s=0.5-5mm; oder
- D=131-160mm, s=0.6-5.5mm; oder
- D=161-250mm, s=0.6-6.5mm.

Die Wanddicke ist für den oben beschriebenen Fall der nicht vollständigen Korrugation bis zur Tiefe t < s ohne Stege angenommen.

Schliesslich hängt auch ein Metergewicht M des Leitungsrohres vom Aussendurchmesser D ab, wobei bevorzugt folgende Parameter erfüllt sind:
- D=40-70mm, M=0.2-2.0kg/m; oder
- D=71-100mm, M=0.5-2.4kg/m; oder
- D=101-130mm, M=0.6-4.0kg/m; oder
- D=131-160mm, M=0.8-6.5kg/m; oder
- D=161-250mm, M=1.0-12.0kg/m.

In Abhängigkeit des Aussendurchmessers des Aussenmantels variiert auch die Anzahl der Stege pro Längeneinheit. Je grösser der Aussendurchmesser ist, desto geringer ist die Anzahl der Stege. Gemäss einer Ausführungsform der Erfindung gibt es eine Mindestanzahl an Stegen, welche beschriftet sein müssen. Diese Anzahl ist eine Konsequenz des Aussendurchmessers des Aussenmantels und der Stegbreite. So können auf einem Rohr mit grossem Aussendurchmesser und mit einer grossen Stegbreite mehrere Informationen aufgebracht werden als bei einem kleinen Aussendurchmesser mit schmalen Stegen bei im Wesentlich gleichbleibend guter Lesbarkeit. Dabei müssen nicht alle Information mittels Laserbeschriftung aufgebracht werden. Gemäss der EN 15632-1:2009+A1:2014 sind auch eine Gravur oder Etiketten zulässig. Die Anzahl der zu beschriftenden Stegen ist in der nachfolgenden Tabelle wie folgt zusammengefasst:

| Aussendurchmesser von bis / mm - mm | Mindestanzahl der beschrifteten Stege pro Meter |
|---|---|
| 61 - 70 | 5 |
| 71 - 80 | 5 |
| 81 - 90 | 5 |
| 91 - 100 | 5 |
| 101 - 110 | 4 |
| 111 - 120 | 4 |
| 121 - 130 | 4 |
| 131 - 140 | 4 |
| 141 - 150 | 3 |
| 151 - 160 | 3 |
| 161 - 170 | 3 |
| 171 - 180 | 3 |
| 181 - 190 | 2 |
| 191 - 200 | 2 |
| 201 - 210 | 2 |
| 211 - 220 | 2 |
| 221 - 230 | 1 |
| 231 - 240 | 1 |
| 241 - 250 | 1 |

Weiter sind nachfolgend die Abhängigkeiten der genannten Parameter vom Aussendurchmesser nochmals in Tabelle zusammengefasst, wobei darauf hingewiesen wird, dass die Werte nicht abschliessend sind und die Erfindung auch mit davon abweichenden Parametern ausführbar ist. Diese Parameter sind besonders bevorzugt, da die Erfindung primär für die Verwendung in Fern- und Nahwärme zum Einsatz kommt. Für die Verwendung in der Kühlung, Industrie oder Haushalt können diese Werte je nach Anwendung von den benannten Werten abweichen.

| **Aussendurchmesser D** | **Wellenlänge W** | **Wellenlänge W** | **Wellenlänge W** |
|---|---|---|---|
| - | - | **bevorzugt** | **meist bevorzugt** |
| Bereich | In Prozent von D | In Prozent von D | In Prozent von D |

| von - bis | von - bis | von - bis | von - bis |
|---|---|---|---|
| [mm - mm] | [% - %] | [% - %] | [% - %] |
| 40 - 70 | 4 - 40 | 12 - 28 | 16 - 23 |
| 71 - 100 | 4 - 40 | 8 - 23 | 12 - 18 |
| 101 - 130 | 3 - 40 | 7 - 22 | 11 - 17 |
| 131 - 160 | 3 - 40 | 6 - 21 | 10 - 16 |
| 161 - 250 | 2 - 40 | 4 - 20 | 8 - 15 |

| **Aussendurchmesser D** | **Stegbreite B** | **Stegbreite B** | **Stegbreite B** |
|---|---|---|---|
| - | - | **bevorzugt** | **meist bevorzugt** |
| Bereich | In Prozent von D | In Prozent von D | In Prozent von D |
| von - bis | von - bis | von - bis | von - bis |
| [mm - mm] | [% - %] | [% - %] | [% - %] |
| 40 - 70 | 5 - 50 | 9 - 25 | 12 - 18 |
| 71 - 100 | 4 - 50 | 6 - 25 | 9 - 15 |
| 101 - 130 | 3 - 50 | 5 - 23 | 8 - 14 |
| 131 - 160 | 2 - 50 | 4 - 23 | 7 - 13 |
| 161 - 250 | 1 - 50 | 3 - 23 | 6 - 13 |

| **Aussendurchmesser D** | **Steghöhe H** | **Steghöhe H** | **Steghöhe H** |
|---|---|---|---|
| - | - | **bevorzugt** | **meist bevorzugt** |
| Bereich | In Prozent von D | In Prozent von D | In Prozent von D |
| von - bis | von - bis | von - bis | von - bis |
| [mm - mm] | [% - %] | [% - %] | [% - %] |
| 40 - 70 | 3 - 25 | 4 - 15 | 5 - 11 |
| 71 - 100 | 2 - 25 | 3 - 14 | 4 - 10 |
| 101 - 130 | 1 - 25 | 2 - 13 | 3 - 9 |
| 131 - 160 | 1 - 25 | 2 - 12 | 3 - 8 |
| 161 - 250 | 1 - 25 | 1 - 11 | 2 - 7 |

| **Aussendurchmesser D** | **Wanddicke s** | **Wanddicke s** | **Wanddicke s** |
|---|---|---|---|
| Bereich | - | **bevorzugt** | **meist bevorzugt** |
| von - bis | von - bis | von - bis | von - bis |
| [mm - mm] | [mm - mm] | [mm - mm] | [mm - mm] |
| 40 - 70 | 0.5-4.5 | 0.8-3.5 | 1.0-3.0 |
| 71 - 100 | 0.5-4.5 | 0.9-3.6 | 1.1-3.1 |
| 101 - 130 | 0.5-5.0 | 1.0-4.0 | 1.2-3.5 |
| 131 - 160 | 0.6-5.5 | 1.1-4.5 | 1.3-4.0 |
| 161 - 250 | 0.6-6.5 | 1.3-5.5 | 1.5-5.0 |

| **Aussendurchmesser D** | **Metergewicht** | **Metergewicht** | **Metergewicht** |
|---|---|---|---|
| Bereich | - | **bevorzugt** | **meist bevorzugt** |
| von - bis | von - bis | von - bis | von - bis |
| [mm - mm] | [kg/m - kg/m] | [kg/m - kg/m] | [kg/m - kg/m] |
| 40 - 70 | 0.2-2.0 | 0.3-1.5 | 0.5-1.2 |
| 71 - 100 | 0.5-2.4 | 0.6-2.3 | 0.7-2.2 |
| 101 - 130 | 0.6-4.0 | 0.8-3.5 | 1.0-3.0 |
| 131 - 160 | 0.8-6.5 | 1.0-5.5 | 1.2-4.5 |
| 161 - 250 | 1.0-12.0 | 1.2-11.0 | 1.6-10.0 |

**Fig. 6** zeigt ein Beispiel einer Beschriftung quer zur Longitudinalachse des Leitungsrohrs aus Fig. 1, und **Fig. 7** zeigt ein Beispiel einer nicht erfindungsgemässen Beschriftung parallel zur Longitudinalachse des Leitungsrohrs aus Fig. 1. Dabei wurde als Beispiel ein Aussendurchmesser von 150 mm zugrunde gelegt. Die Talbreite Bt, auch Abstand zwischen zwei benachbarten Stegen benannt, beträgt 6 mm und die Stegbreite 8 mm. Somit ergibt sich eine Wellenlänge W=Bt+B=14 mm.

Bevorzugt hängt eine Mindestanzahl der beschrifteten Stege St pro Meter Länge des Aussenmantels mindestens vom Aussendurchmesser D ab, wobei vorzugsweise folgende Parameter erfüllt sind:
- D=40-100mm, St=5; oder
- D=101-140mm, St=4; oder
- D=141-180mm, St=3; oder
- D=181-220mm, St=2; oder
- D=221-250mm, St=1.

Andere Parameter von denen die Anzahl der beschrifteten Stege abhängt sind die Schriftgrösse und der Informationsgehalt, d.h. die Länge des Informationsblocks. Bei der Ausführungsform aus Fig. 6 ist die Schrifthöhe durch die Stegbreite begrenzt, wobei sie immer kleiner als die Stegbreite jedoch so gross wie möglich gewählt wird, um eine gute Lesbarkeit zu erreichen. Bei der Beschriftung auf einem Aussenmantel gemäss Fig. 5 (mit gerundeten Oberseiten der Stege) kann/muss die Schrifthöhe noch kleiner sein, um im Fokusbereich der Laservorrichtung zu bleiben. Dies gilt mutatis mutandis für die Schriftbreite bei der Beschriftung entlang der Longitudinalachse aus Fig. 7. Auf den Fokusbereich des Lasers der Laservorrichtung wurde in Zusammenhang mit Fig. 3 näher eingegangen.

Bei der bevorzugten Querbeschriftung aus Fig. 6 wurde der weiter oben bei den Testrohren verwendete Text als Beispiel angegeben, bei dem beispielhaft mehrere komplette Informationen angenommen sind ("CPX-H, 25+25/11, 2LS, Arial"). Der gesamte Informationsblock 11 ist wie bereits erwähnt als die Gesamtheit des auf die drei Stege verteilten Textes anzusehen. Ein Teilblock 11a des gesamten Informationsblocks 11 ist durch den Text auf einem einzelnen Steg gebildet. Wiederum ist die komplette Information eine einzelne Angabe im Teilblock. Wie in Fig. 6 erkennbar ist, sind auf jedem Steg komplette Informationen abgebildet, was bevorzugt ist, um die Lesbarkeit zu verbessern, beispielsweise wenn der Aussenmantel abgelängt wird. Würde in diesem Beispiel der Aussenmantel so abgelängt, dass der linke Steg mit dem Teilblock "CPX-H 2" abgetrennt wird, so sind trotzdem komplette Informationen auf den verbleibenden beschrifteten Teilblöcken erkennbar. Es ist aber selbstverständlich auch möglich, auf komplette Informationen zu verzichten und diese aufzutrennen. Dies ist in Fig. 7 veranschaulicht, in der z.B. die Angabe "CPX-H 2" in "CPX" auf dem linken Steg und "-H 2" auf dem nächsten Steg getrennt ist. Diese Auftrennung kann bevorzugt sein, wenn aufgrund eines langen Informationsblocks bei gleichzeitig wenigen Stegen (vgl. Anzahl Stege abhängig vom Aussendurchmesser) so viele Informationen wie möglich auf dem zu Verfügung stehenden, beschreibbaren Kreisbogen K jedes Stegs passen sollen. Auch ist diese Alternative bei der Längsbeschriftung vorzuziehen, da in diesem Fall die Wortlänge durch die Breite des Stegs stark eingeschränkt ist.

Der beschreibbare Kreisbogen K ist dabei grösser bei der Querbeschriftung aus Fig. 6 als bei der Längsbeschriftung aus Fig. 7. Ein Vergleich der beiden Beschriftungsrichtungen ergibt, dass bei der Querschrift mehrere Informationen auf weniger Stege untergebracht werden können, jedoch der Kreisbogen grösser ist, was sich auf die Fokussierung auswirkt, und bei der Längsschrift zwar mehrere Stege zum Unterbringen des gesamten Informationsblocks notwendig sind, aber der Kreisbogen kleiner ist, so dass eine gute Fokussierung möglich ist.

In einer weiteren Ausführungsform müssen die Teilblöcke nicht auf unmittelbar aneinander grenzenden Stegen aufgebracht werden. Stattdessen ist es möglich zwischen einem oder mehreren beschrifteten Stegen auch einen oder mehrere Stege zu haben, welch nicht beschriftet sind. Wichtig ist bei der gesamten Aufteilung nur, dass alle benötigten Informationen pro Längeneinheit aufgebracht werden. Es ist auch möglich Stege zwischen gesamten Informationsblöcken frei zu belassen. Dabei können die Teilblöcke auf unmittelbar aufeinanderfolgende Stege oder mit nicht beschrifteten Stege dazwischen untergebracht werden. Freie Stege zwischen gesamten Informationsblöcken oder zwischen Teilblöcken können z.B. vorgesehen werden, wenn der Aussenmantel mit den bereits erwähnten zusätzlichen Etiketten oder Gravuren versehen werden soll.

Ein Informationsblock kann nicht abschliessend eine oder mehrere der nachfolgenden Informationen umfassen:
- eine Längenangabe,
- eine Artikelbezeichnung,
- eine Losnummer,
- eine Artikelnummer,
- mindestens eine für den Aussenmantel bzw. das Leitungsrohr relevante Norm.

Die Grösse (Anzahl an Informationen) jedes einzelnen Teilblocks ist vorzugsweise so gewählt, dass sie auf einem Steg untergebracht werden kann, ohne dass ein Teil des zu beschriftenden Kreisbogens ausserhalb des Fokus des Lasers gerät, was in Zusammenhang mit Fig. 3 erläutert wurde. Dabei können einzelne Informationen mit einem grösseren Schrifttyp ausgeführt werden und andere mit einem kleineren. Dies kann beispielsweise in Abhängigkeit von der Wichtigkeit des Inhalts angepasst werden. Weniger wichtige Informationen können beispielsweise kleiner sein. Auch können Teilblöcke mit weniger Informationen mit einer grösseren Schrift und Teilblöcke mit mehreren Informationen mit einer kleineren Schrift aufgebracht werden.

Die Beschriftung der Stege auf einem Leitungsrohr, insbesondere bei kontinuierlichem Herstellungsverfahren des Leitungsrohrs, stellt im Gegensatz zu bekannten Beschriftungsverfahren auf glatten Oberflächen, hohe Anforderungen an die Positionsbestimmung sowie die Präzision der Beschriftungslage bei gleichzeitig guter Lesbarkeit. Die vorliegende Erfindung hat einerseits den Vorteil, dass durch die Verwendung einer Laserbeschriftung die Lesbarkeit auf Leitungsrohren erhöht wird, und andererseits dass durch die Verwendung einer Ablenkvorrichtung im Zusammenspiel mit einem Positionsbestimmungssensor und einer Steuerung eine hohe Präzision der Position der Beschriftung insbesondere bei laufender Herstellung erreichbar ist. Ausserdem wird durch die Verwendung der Ablenkvorrichtung ein Fokusbereich möglich, der einen gesamten zu beschriftenden Kreisbogen abdeckt und dabei eine gute Lesbarkeit auch in den Randbereichen des Kreisbogens gewährleistet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Thermisch gedämmtes Leitungsrohr (1), umfassend mindestens ein Mediumrohr (4), mindestens eine um das Mediumrohr herum angeordnete Wärmedämmung (3) und mindestens einen um die Wärmedämmung herum angeordneten Aussenmantel (2) wobei der Aussenmantel (2) ein korrugierter Aussenmantel ist, der aussenseitig Stege (5a) und Täler (5b) aufweist, die sich quer zu einer Longitudinalachse (z) des Aussenmantels (2) über einen gesamten Mantelumfang erstrecken und sich in Richtung der Longitudinalachse (z) des Aussenmantels (2) abwechseln, wobei der Aussenmantel (2) durch einen Aussendurchmesser (D) zwischen zwei gegenüberliegenden, höchsten Punkten eines Stegs (5a) charakterisiert ist,
**dadurch gekennzeichnet, dass** der Aussenmantel (2) auf einem Teil einer Oberseite mindestens eines Stegs (5a) eine Beschriftung (11a, 11) aufweist, welche sich quer zur Longitudinalachse (z) und auf einer Länge eines Kreisbogens (K) des Mantelumfangs erstreckt, wobei die Beschriftung (11a, 11) auf diesem Steg (5a) mindestens einen Teilblock (11a) von verschiedenen Informationen eines gesamten Informationsblocks (11) oder einen gesamten Informationsblock (11) enthält, wobei die Beschriftung nur auf Stegen angebracht ist und sich nach einer vorgegebenen Anzahl von Stegen, gegebenenfalls mit einer oder mehreren geänderten Informationen des Informationsblocks (11), wiederholt.

2. Thermisch gedämmtes Leitungsrohr nach Anspruch 1, wobei im Falle dass die Beschriftung auf einem individuellen Steg (5a) lediglich aus einem Teilblock (11a) des gesamten Informationsblocks (11) besteht, der gesamte Informationsblock (11) auf mehrere, insbesondere aufeinanderfolgende, Stege (5a) des Aussenmantels (2) verteilt ist, derart, dass auf einem einzelnen Steg (5a) eine oder mehrere komplette Informationen abgebildet sind.

3. Thermisch gedämmtes Leitungsrohr nach einem der vorangehenden Ansprüche, wobei der Aussenmantel (2) eine Polymerschicht (P) umfasst, derart dass die Stege (5a) nicht von der Polymerschicht (P) bedeckt sind.

4. Thermisch gedämmtes Leitungsrohr nach einem der vorangehenden Ansprüche, wobei ein maximaler Mittelpunktswinkel des Kreisbogens (K) des Rohrumfangs 180°, bevorzugt 140°, meist bevorzugt 100° beträgt, und wobei ein minimaler Mittelpunktswinkel derart gewählt ist, dass ein komplettes Schriftzeichen einer der Informationen auf der Oberseite des Stegs (5a) lesbar ist.

5. Thermisch gedämmtes Leitungsrohr nach einem der vorangehenden Ansprüche, wobei
•
• der Aussenmantel (2) eine korrugierte Wellenform, charakterisiert durch Wellenlänge W, Stegbreite B und Steghöhe H, aufweist,
wobei folgende Parameter erfüllt sind:
• D=40-70mm, W=4-40% von D, B=5-50% von D, H=3-25% von D; oder
• D=71-100mm, W=4-40% von D, B=4-50% von D, H=2-25% von D; oder
• D=101-130mm, W=3-40% von D, B=3-50% von D, H=1-25% von D; oder
• D=131-160mm, W=3-40% von D, B=2-50% von D, H=1-25% von D; oder
• D=161-250mm, W=2-40% von D, B=1-50% von D, H=1-25% von D.

6. Thermisch gedämmtes Leitungsrohr nach einem der vorangehenden Ansprüche, wobei der Aussendurchmesser (D) zwischen 40 und 250 mm beträgt.

7. Thermisch gedämmtes Leitungsrohr nach einem der vorangehenden Ansprüche, wobei eine Mindestanzahl der beschrifteten Stege (5a) pro Meter Länge des Aussenmantels (2) mindestens vom Aussendurchmesser (D) abhängt, wobei folgende Parameter erfüllt sind:
• D=40-100mm, St=5; oder
• D=101-140mm, St=4; oder
• D=141-180mm, St=3; oder
• D=181-220mm, St=2; oder
• D=221-250mm, St=1.

8. Thermisch gedämmtes Leitungsrohr nach einem der vorangehenden Ansprüche, wobei eine Wanddicke s des Aussenmantels (2) ohne Stege vom Aussendurchmesser (D) abhängt, wobei folgende Parameter erfüllt sind:
• D=40-100mm, s=0.5-4.5mm; oder
• D=101-130mm, s=0.5-5mm; oder
• D=131-160mm, s=0.6-5.5mm; oder
• D=161-250mm, s=0.6-6.5mm.

9. Thermisch gedämmtes Leitungsrohr nach einem der vorangehenden Ansprüche, wobei ein Metergewicht M des Leitungsrohres (1) vom Aussendurchmesser (D) abhängt, wobei folgende Parameter erfüllt sind:
• D=40-70mm, M=0.2-2.0kg/m; oder
• D=71-100mm, M=0.5-2.4kg/m; oder
• D=101-130mm, M=0.6-4.0kg/m; oder
• D=131-160mm, M=0.8-6.5kg/m; oder
• D=161-250mm, M=1.0-12.0kg/m.

10. Thermisch gedämmtes Leitungsrohr nach einem der vorangehenden Ansprüche, wobei der Aussenmantel (2) eines oder mehrere der folgenden Kriterien erfüllt:
• der Kunststoff umfasst ein Polymer aus der Gruppe der Polyolefine, insbesondere besteht er aus einem Polyethylen oder Polypropylen;
• ein Schmelzindex des Kunststoffs ist 0.1 - 25 g/10 min, gemessen bei einer Last von 2.16 kg und einer Temperatur von 190 °C gemäss ISO 1133.

11. Thermisch gedämmtes Leitungsrohr nach einem der vorangehenden Ansprüche, wobei dem Kunststoff des Aussenmantels ein erstes Additiv für Laserbeschriftung beigemischt ist, insbesondere wobei das erste Additiv mindestens ein Schichtsilikat aus der Familie der Glimmer ist, insbesondere wobei ein Gehalt des ersten Additivs bei unter 3 Gewichtsprozent, bevorzugt bei unter 2.5 Gewichtsprozent, am meisten bevorzugt bei unter 2 Gewichtsprozent liegt, und/oder mindestens ein zweites Additiv als Lichtschutzmittel beigemischt ist.

12. Thermisch gedämmtes Leitungsrohr nach einem der vorangehenden Ansprüche, wobei der Kunststoff des Aussenmantels (2) einen Russgehalt von unter 10 hat.

13. Vorrichtung zur Herstellung eines korrugierten Aussenmantels (2) eines thermisch gedämmten Leitungsrohrs (1) nach einem der vorangehenden Ansprüche, umfassend
eine Station (6), insbesondere einen Extruder oder Coextruder, zur Bereitstellung eines rohen, glatten Aussenmantels,
ein Transportband (9) zum Transport des rohen, glatten Aussenmantels in Herstellungsrichtung (R) parallel zu seiner Longitudinalachse (z),
ein der Station (6) nachgeschaltetes Formwerkzeug (7) zur Bildung der aussenseitigen Korrugation (5) des Aussenmantels (2),
eine dem Formwerkzeug (7) nachgeschaltete Laservorrichtung (8) zum Aufbringen der Beschriftung (11a, 11) auf mindestens einem Steg (5a) des Aussenmantels (2),
**dadurch gekennzeichnet, dass** die Laservorrichtung (8) in einem derartigen Abstand (d1) vom Aussenmantel (2) angeordnet und diesem zugewandt ist, dass ein Aktionsbereich (20) der Laservorrichtung (8) den zur Beschriftung vorgesehenen Kreisbogen (K) der Oberseite eines oder mehrerer Stege (5a) umfasst,
mindestens einen Sensor (8a) zur Detektion eines Eintritts eines ersten zu beschriftenden Stegs (5a) in den Aktionsbereich (20) der Laservorrichtung (8),
eine Steuerung (8b) zum Ansteuern der Laservorrichtung (8), wobei die Steuerung (8b) mit Daten über eine Stegbreite (B) und einen Abstand (Bt) zwischen zwei benachbarten Stegen (5a) versorgbar ist, wobei die Steuerung (8b) derart ausgestaltet ist, dass sie die Beschriftung eines oder mehrerer Stege (5a) mittels eines Laserstrahls der der Laservorrichtung (8) triggert, sobald sie vom Sensor (8a) ein Triggersignal empfangen hat.

14. Vorrichtung nach Anspruch 13, wobei die Laservorrichtung (8) mindestens einen Laserkopf und eine Antriebsvorrichtung mit einer Ablenkungsoptik für einen Laserstrahl des Laserkopfes und einer Antriebsvorrichtung zum Verstellen der Ablenkungsoptik umfasst, welche Antriebsvorrichtung die Ablenkungsoptik derart mit einer Geschwindigkeit des Transportbands (9) synchronisiert, dass ein Beschriftungsvorgang der Laservorrichtung (8) bei laufendem Transportband (9) durchführbar ist, insbesondere wobei die Synchronisation Geschwindigkeitsabweichungen des Transportbands (9) berücksichtigt.

15. Vorrichtung nach Anspruch 14, wobei die Ablenkvorrichtung der Laservorrichtung (8) eine Anzahl von galvanischen Spiegeln umfasst, die von einem oder mehreren Spiegelantrieben derart bewegt werden, dass sie durch Ablenkung des Laserstrahls auf die Oberseiten der zu beschriftenden Stege eine Beschriftung mehrerer Stege (5a) im Aktionsbereich ermöglicht.

16. Vorrichtung nach Anspruch 13 bis 15, wobei die Laservorrichtung (8) stationär ist oder wobei die Laservorrichtung (8) in einem konstanten Abstand (d1) zum Aussenmantel (2) über die gesamte Erstreckung des Kreisbogens quer zur Longitudinalachse (z) hin und her verschiebbar ist.

17. Vorrichtung nach Anspruch 15, wobei der Abstand (d1) der Laservorrichtung (8) vom Aussenmantel (2) in Abhängigkeit vom Aussendurchmesser (D) derart veränderbar ist, dass der gesamte zur Beschriftung vorgesehene Kreisbogen (K) der Oberseite des mindestens einen zu beschriftenden Stegs (5a) in einem Fokusbereich der Laservorrichtung (8) liegt.

18. Verfahren zur Beschriftung eines korrugierten Aussenmantels (2) eines thermisch gedämmten Leitungsrohrs (1) nach einem der Ansprüche 1 bis 12 mittels der Vorrichtung nach einem der Ansprüche 13 bis 17, umfassend die Schritte:
a) Bereitstellen des korrugierten Aussenmantels (2) mittels des Transportbands (9),
b) Detektieren des Eintritts mindestens eines ersten zur Beschriftung vorgesehenen Stegs (5a) in den Aktionsbereich (20) der Laservorrichtung (8) mittels des Sensors (8a),
c) Triggern des Beschriftungsvorgangs für die Laservorrichtung (8) mittels der Steuerung (8b),
d) Wiederholen der Schritte b) und c) nach der Beschriftung des Stegs oder der Stege (5a) mit einem gesamten Informationsblock (11), gegebenenfalls wobei eine oder mehrere Informationen des Informationsblocks (11) geändert werden.

## Claims

1. Thermally insulated line pipe (1), comprising at least one medium pipe (4), at least one thermal insulation (3) arranged around the medium pipe and at least one outer jacket (2) arranged around the thermal insulation, wherein the outer jacket (2) is a corrugated outer jacket which has ridges (5a) and valleys (5b) on the outside, which extend transversely to a longitudinal axis (z) of the outer jacket (2) over an entire jacket circumference and alternate in the direction of the longitudinal axis (z) of the outer jacket (2), wherein the outer jacket (2) is **characterized by** an outside diameter (D) between two opposite, highest points of a ridge (5a),
**characterized in that** the outer jacket (2) has a marking (11a, 11) on a part of an upper side of at least one ridge (5a), which marking extends transversely to the longitudinal axis (z) and along a length of an arc (K) of the circumference of the jacket, wherein the marking (11a, 11) on this ridge (5a) contains at least one partial block (11a) of different information of an entire information block (11) or an entire information block (11), wherein the marking is only applied to ridges and is repeated after a predetermined number of ridges, optionally with one or more changed information of the information block (11).

2. Thermally insulated line pipe according to claim 1, wherein in the event that the marking on an individual ridge (5a) consists only of a partial block (11a) of the entire information block (11), the entire information block (11) is distributed over several, in particular successive, ridges (5a) of the outer jacket (2) in such a way that one or more complete pieces of information are depicted on a single ridge (5a).

3. Thermally insulated line pipe according to one of the preceding claims, wherein the outer jacket (2) comprises a polymer layer (P) in such a way that the ridges (5a) are not covered by the polymer layer (P).

4. Thermally insulated line pipe according to one of the preceding claims, wherein a maximum center point angle of the circular arc (K) of the pipe circumference is 180°, preferably 140°, most preferably 100°, and wherein a minimum center point angle is selected such that a complete character of one of the pieces of information on the upper side of the ridge (5a) is legible.

5. Thermally insulated line pipe according to one of the preceding claims, wherein
- the outer jacket (2) has a corrugated waveform, **characterized by** wave length W, ridge width B and ridge height H,
wherein the following parameters are fulfilled:
- D=40-70mm, W=4-40% of D, B=5-50% of D, H=3-25% of D; or
- D=71-100mm, W=4-40% of D, B=4-50% of D, H=2-25% of D; or
- D=101-130mm, W=3-40% of D, B=3-50% of D, H=1-25% of D; or
- D=131-160mm, W=3-40% of D, B=2-50% of D, H=1-25% of D; or
- D=161-250mm, W=2-40% of D, B=1-50% of D, H=1-25% of D.

6. Thermally insulated line pipe according to one of the preceding claims, wherein the outer diameter (D) is between 40 and 250 mm.

7. Thermally insulated line pipe according to one of the preceding claims, wherein a minimum number of the marked ridges (5a) per meter length of the outer jacket (2) depends at least on the outer diameter (D), wherein the following parameters are fulfilled:
- D=40-100mm, St=5; or
- D=101-140mm, St=4; or
- D=141-180mm, St=3; or
- D=181-220mm, St=2; or
- D=221-250mm, St=1.

8. Thermally insulated line pipe according to one of the preceding claims, wherein a wall thickness s of the outer jacket (2) without ridges depends on the outer diameter (D), wherein the following parameters are fulfilled:
- D=40-100mm, s=0.5-4.5mm; or
- D=101-130mm, s=0.5-5mm; or
- D=131-160mm, s=0.6-5.5mm; or
- D=161-250mm, s=0.6-6.5mm.

9. Thermally insulated line pipe according to one of the preceding claims, wherein a meter weight M of the line pipe (1) depends on the outer diameter (D), wherein the following parameters are fulfilled:
- D=40-70mm, M=0.2-2.0kg/m; or
- D=71-100mm, M=0.5-2.4kg/m; or
- D=101-130mm, M=0.6-4.0kg/m; or
- D=131-160mm, M=0.8-6.5kg/m; or
- D=161-250mm, M=1.0-12.0kg/m.

10. Thermally insulated conduit according to one of the preceding claims, wherein the outer jacket (2) fulfills one or more of the following criteria:
- the plastic comprises a polymer from the group of polyolefins, in particular it consists of a polyethylene or polypropylene;
- a melt flow index of the plastic is 0.1 - 25 g/10 min, measured at a load of 2.16 kg and a temperature of 190 °C according to ISO 1133.

11. Thermally insulated line pipe according to one of the preceding claims, wherein a first additive for laser marking is admixed to the plastic of the outer jacket, in particular wherein the first additive is at least one layered silicate from the mica family, in particular wherein a content of the first additive is below 3 percent by weight, preferably below 2.5 percent by weight, most preferably below 2 percent by weight, and/or at least one second additive is admixed as a light stabilizer.

12. Thermally insulated line pipe according to one of the preceding claims, wherein the plastic of the outer jacket (2) has a carbon black content of less than 1%.

13. Apparatus for producing a corrugated outer jacket (2) of a thermally insulated line pipe (1) according to one of the preceding claims, comprising
a station (6), in particular an extruder or coextruder, for providing a raw, smooth outer jacket,
a conveyor belt (9) for transporting the raw, smooth outer jacket in the manufacturing direction (R) parallel to its longitudinal axis (z),
a forming tool (7) downstream of the station (6) for forming the external corrugation (5) of the outer jacket (2),
a laser device (8) connected downstream of the forming tool (7) for applying the marking (11a, 11) to at least one ridge (5a) of the outer jacket (2),
**characterized in that** the laser device (8) is arranged at such a distance (d1) from the outer jacket (2) and faces the latter that an action area (20) of the laser device (8) comprises the circular arc (K) of the upper side of one or more ridges (5a) provided for marking,
at least one sensor (8a) for detecting the entry of a first ridge (5a) to be marked into the action area (20) of the laser device (8),
a controller (8b) for triggering the laser device (8), wherein the controller (8b) can be supplied with data about a ridge width (B) and a distance (Bt) between two adjacent ridges (5a), wherein the controller (8b) is designed such that it triggers the marking of one or more ridges (5a) by means of a laser beam of the laser device (8) as soon as it has received a trigger signal from the sensor (8a).

14. Device according to claim 13, wherein the laser device (8) comprises at least one laser head and a drive device with a deflection optics for a laser beam of the laser head and a drive device for adjusting the deflection optics, which drive device synchronizes the deflection optics with a speed of the conveyor belt (9) in such a way that a marking process of the laser device (8) can be carried out while the conveyor belt (9) is running, in particular wherein the synchronization takes into account speed deviations of the conveyor belt (9).

15. Device according to claim 14, wherein the deflection device of the laser device (8) comprises a number of galvanic mirrors which are moved by one or more mirror drives in such a way that, by deflecting the laser beam onto the upper sides of the ridges to be marked, it enables a plurality of ridges (5a) to be marked in the action area.

16. Device according to claim 13 to 15,
wherein the laser device (8) is stationary or wherein the laser device (8) is displaceable back and forth at a constant distance (d1) from the outer jacket (2) over the entire extent of the circular arc transversely to the longitudinal axis (z).

17. Device according to claim 15, wherein the distance (d1) of the laser device (8) from the outer jacket (2) can be varied as a function of the outer diameter (D) in such a way that the entire circular arc (K) of the upper side of the at least one ridge (5a) to be marked lies in a focal region of the laser device (8).

18. Method for marking a corrugated outer jacket (2) of a thermally insulated line pipe (1) according to one of claims 1 to 12 by means of the device according to one of claims 13 to 17, comprising the steps of:
(a) providing the corrugated outer jacket (2) by means of the conveyor belt (9),
b) detecting the entry of at least a first ridge (5a) provided for marking into the action area (20) of the laser device (8) by means of the sensor (8a),
c) triggering the marking process for the laser device (8) by means of the controller (8b),
d) repeating steps b) and c) after the marking of the ridge or ridges (5a) with an entire information block (11), if necessary with one or more pieces of information of the information block (11) being changed.

## Revendications

1. Conduite isolée thermiquement (1), comprenant au moins un tube médian (4), au moins une isolation thermique (3) disposée autour du tube médian et au moins une enveloppe extérieure (2) disposée autour de l'isolation thermique, dans laquelle l'enveloppe extérieure (2) est une enveloppe extérieure ondulée qui présente des arêtes (5a) et des vallées (5b) à l'extérieur, qui s'étendent transversalement à un axe longitudinal (z) de l'enveloppe extérieure (2) sur toute la circonférence de l'enveloppe et qui alternent dans la direction de l'axe longitudinal (z) de l'enveloppe extérieure (2), dans laquelle l'enveloppe extérieure (2) est **caractérisée par** un diamètre extérieur (D) entre deux points opposés les plus élevés d'une crête (5a),
**caractérisée en ce que** l'enveloppe extérieure (2) présente un marquage (11a, 11) sur une partie du côté supérieur d'au moins une arête (5a), lequel marquage s'étend transversalement à l'axe longitudinal (z) et sur la longueur d'un arc (K) de la circonférence de l'enveloppe, dans lequel le marquage (11a, 11) sur cette arête (5a) contient au moins un bloc partiel (11a) d'informations différentes d'un bloc d'informations complet (11) ou un bloc d'informations complet (11), le marquage étant uniquement appliqué aux arêtes et répété après un nombre prédéterminé d'arêtes, éventuellement avec une ou plusieurs informations modifiées du bloc d'informations (11).

2. Conduite isolée thermiquement selon la revendication 1, dans laquelle, dans le cas où le marquage sur une arête individuelle (5a) ne consiste qu'en un bloc partiel (11a) du bloc d'information complet (11), le bloc d'information complet (11) est réparti sur plusieurs arêtes (5a), en particulier successives, de l'enveloppe extérieure (2) de telle sorte qu'un ou plusieurs éléments d'information complets sont représentés sur une seule arête (5a).

3. Conduite isolée thermiquement selon l'une des revendications précédentes, dans laquelle l'enveloppe extérieure (2) comprend une couche de polymère (P) de telle sorte que les arêtes (5a) ne sont pas recouvertes par la couche de polymère (P).

4. Conduite isolée thermiquement selon l'une des revendications précédentes, dans laquelle un angle maximal du point central de l'arc de cercle (K) de la circonférence de la conduite est de 180°, de préférence 140°, de préférence 100°, et dans laquelle un angle minimal du point central est choisi de manière à ce qu'un caractère complet de l'une des informations sur la face supérieure de l'arête (5a) soit lisible.

5. Conduite isolée thermiquement selon l'une des revendications précédentes, dans laquelle
- l'enveloppe extérieure (2) a une forme d'onde ondulée, **caractérisée par** une longueur d'onde W, une largeur d'arête B et une hauteur d'arête H,
les paramètres suivants étant respectés :
- D=40-70mm, W=4-40% de D, B=5-50% de D, H=3-25% de D ; ou
- D=71-100mm, L=4-40% de D, B=4-50% de D, H=2-25% de D ; ou
- D=101-130mm, L=3-40% de D, B=3-50% de D, H=1-25% de D ; ou
- D=131-160mm, L=3-40% de D, B=2-50% de D, H=1-25% de D ; ou
- D=161-250mm, L=2-40% de D, B=1-50% de D, H=1-25% de D.

6. Conduite isolée thermiquement selon l'une des revendications précédentes, dans laquelle le diamètre extérieur (D) est compris entre 40 et 250 mm.

7. Conduite isolée thermiquement selon l'une des revendications précédentes, dans laquelle un nombre minimum d'arêtes marquées (5a) par mètre de longueur de l'enveloppe extérieure (2) dépend au moins du diamètre extérieur (D), les paramètres suivants étant respectés :
- D=40-100mm, St=5 ; ou
- D=101-140mm, St=4 ; ou
- D=141-180mm, St=3 ; ou
- D=181-220mm, St=2 ; ou
- D=221-250mm, St=1.

8. Conduite isolée thermiquement selon l'une des revendications précédentes, dans laquelle l'épaisseur de paroi s de l'enveloppe extérieure (2) sans arêtes dépend du diamètre extérieur (D), les paramètres suivants étant respectés :
- D=40-100mm, s=0,5-4,5mm ; ou
- D=101-130mm, s=0,5-5mm ; ou
- D=131-160mm, s=0,6-5,5mm ; ou
- D=161-250mm, s=0,6-6,5mm.

9. Conduite isolée thermiquement selon l'une des revendications précédentes, dans laquelle le poids au mètre M de la conduite (1) dépend du diamètre extérieur (D), les paramètres suivants étant respectés :
- D=40-70mm, M=0,2-2,0kg/m ; ou
- D=71-100mm, M=0,5-2,4kg/m ; ou
- D=101-130mm, M=0,6-4,0kg/m ; ou
- D=131-160mm, M=0,8-6,5kg/m ; ou
- D=161-250mm, M=1,0-12,0kg/m.

10. Conduite isolée thermiquement selon l'une des revendications précédentes, dans laquelle l'enveloppe extérieure (2) répond à un ou plusieurs des critères suivants :
- la matière plastique comprend un polymère du groupe des polyoléfines, en particulier un polyéthylène ou un polypropylène ;
- l'indice de fluidité de la matière plastique est compris entre 0,1 et 25 g/10 min, mesuré à une charge de 2,16 kg et à une température de 190 °C conformément à la norme ISO 1133.

11. Conduite isolée thermiquement selon l'une des revendications précédentes, dans laquelle un premier additif pour le marquage au laser est ajouté au plastique de l'enveloppe extérieure, en particulier dans laquelle le premier additif est au moins un silicate en couches de la famille des micas, en particulier dans laquelle une teneur en premier additif est inférieure à 3 % en poids, de préférence inférieure à 2,5 % en poids, de préférence encore inférieure à 2 % en poids, et/ou au moins un deuxième additif est ajouté en tant que stabilisateur de lumière.

12. Conduite isolée thermiquement selon l'une des revendications précédentes, dans laquelle le plastique de l'enveloppe extérieure (2) a une teneur en noir de carbone inférieure à 1 %.

13. Appareil pour la production d'une enveloppe extérieure ondulée (2) d'une conduite isolée thermiquement (1) selon l'une des revendications précédentes, comprenant
une station (6), en particulier une extrudeuse ou une coextrudeuse, pour fournir une enveloppe extérieure brute et lisse,
une bande transporteuse (9) pour transporter l'enveloppe extérieure brute et lisse dans le sens de fabrication (R) parallèlement à son axe longitudinal (z),
un outil de formage (7) en aval de la station (6) pour former l'ondulation externe (5) de l'enveloppe extérieure (2),
un dispositif laser (8) connecté en aval de l'outil de formage (7) pour appliquer le marquage (11a, 11) sur au moins une arête (5a) de l'enveloppe extérieure (2),
**caractérisé en ce que** le dispositif laser (8) est disposé à une distance (d1) de l'enveloppe extérieure (2) et fait face à cette dernière de telle sorte qu'une zone d'action (20) du dispositif laser (8) comprend l'arc de cercle (K) du côté supérieur d'une ou de plusieurs arêtes (5a) prévues pour le marquage,
au moins un capteur (8a) pour détecter l'entrée d'une première arête (5a) à marquer dans la zone d'action (20) du dispositif laser (8),
une commande (8b) pour déclencher le dispositif laser (8), dans lequel la commande (8b) peut être alimentée en données concernant une largeur d'arête (B) et une distance (Bt) entre deux arêtes adjacentes (5a), dans lequel la commande (8b) est conçue de manière à déclencher le marquage d'une ou de plusieurs arêtes (5a) au moyen d'un faisceau laser du dispositif laser (8) dès qu'il a reçu un signal de déclenchement du capteur (8a) .

14. Dispositif selon la revendication 13, dans lequel le dispositif laser (8) comprend au moins une tête laser et un dispositif d'entraînement avec une optique de déviation pour un faisceau laser de la tête laser et un dispositif d'entraînement pour ajuster l'optique de déviation, lequel dispositif d'entraînement synchronise l'optique de déviation avec une vitesse de la bande transporteuse (9) de telle sorte qu'un processus de marquage du dispositif laser (8) peut être effectué pendant que la bande transporteuse (9) est en marche, en particulier dans lequel la synchronisation prend en compte les écarts de vitesse de la bande transporteuse (9) .

15. Dispositif selon la revendication 14, dans lequel le dispositif de déviation du dispositif laser (8) comprend un certain nombre de miroirs galvaniques qui sont déplacés par un ou plusieurs entraînements de miroirs de telle sorte que, en déviant le faisceau laser sur les côtés supérieurs des arêtes à marquer, il permet de marquer une pluralité d'arêtes (5a) dans la zone d'action.

16. Dispositif selon les revendications 13 à 15, dans lequel le dispositif laser (8) est stationnaire ou dans lequel le dispositif laser (8) peut être déplacé d'avant en arrière à une distance constante (d1) de l'enveloppe extérieure (2) sur toute l'étendue de l'arc de cercle transversalement à l'axe longitudinal (z).

17. Dispositif selon la revendication 15, dans lequel la distance (d1) du dispositif laser (8) par rapport à l'enveloppe extérieure (2) peut être modifiée en fonction du diamètre extérieur (D) de manière à ce que l'ensemble de l'arc de cercle (K) de la face supérieure de l'au moins une arête (5a) à marquer se trouve dans une zone focale du dispositif laser (8).

18. Procédé de marquage d'une enveloppe extérieure ondulée (2) d'une conduite thermiquement isolée (1) selon l'une des revendications 1 à 12 au moyen du dispositif selon l'une des revendications 13 à 17, comprenant les étapes de :
(a) fournir l'enveloppe extérieure ondulée (2) au moyen de la bande transporteuse (9),
b) détecter l'entrée d'au moins une première arête (5a) prévue pour le marquage dans la zone d'action (20) du dispositif laser (8) au moyen du capteur (8a),
c) déclencher le processus de marquage pour le dispositif laser (8) au moyen de la commande (8b),
d) répéter les étapes b) et c) après le marquage de la ou des arêtes (5a) avec un bloc d'informations complet (11), si nécessaire en modifiant un ou plusieurs éléments d'information du bloc d'informations (11).
